# EUROPEAN PATENT SPECIFICATION

(11) **EP 1 607 947 B1**
(45) Date of publication and mention of the grant of the patent: **09.11.2011**
(21) Application number: 04722675.8
(22) Date of filing: 23.03.2004
(51) Int. Cl.: G11B 7/0045, G11B 7/125

(54) **METHOD FOR CONTROLLING TRIAL WRITE ONTO OPTICAL RECORDING MEDIUM**
VERFAHREN ZUR STEUERUNG DER VERSUCHSSCHREIBOPERATION AUF EIN OPTISCHES AUFZEICHNUNGSMEDIUM
MÉTHODE DE CONTRÔLE D' ESSAIS D' ÉCRITURE SUR UN SUPPORT D' ENREGISTREMENT OPTIQUE

(30) Priority: 25.03.2003 JP 2003083347
(43) Date of publication of application: 21.12.2005
(73) Proprietor: Ricoh Company, Ltd., Tokyo 143-8555 (JP)
(72) Inventor: YAMAMOTO, Norihiro, Yokohama-shi, Kangawa 2250002 (JP)
(74) Representative: Mounteney, Simon James
(86) International application number: PCT/JP2004/003912
(87) International publication number: WO 2004/086377

(56) References cited:
- EP-A- 1 244 096
- JP-A- 11 003 550
- JP-A- 11 003 550
- JP-A- 2000 311 346
- JP-A- 2000 311 346
- JP-A- 2001 014 713
- JP-A- 2001 052 337
- JP-A- 2001 052 337
- JP-A- 2001 126 255
- JP-A- 2001 126 255
- JP-A- 2002 358 648
- JP-A- 2002 358 648
- JP-A- 2003 022 532
- JP-A- 2003 022 532
- JP-A- 2003 030 842
- JP-A- 2003 030 842
- US-A1- 2003 063 535

## Description

### Field of the Invention

The present invention generally relates to a method of controlling a write trial process that is performed when recording information on a writable optical record medium, and also relates to an optical information recording apparatus, a computer-readable record medium having an optical-information recording purpose program recorded therein.

### Background Technology

At present, various optical record media are available. In writable optical record media, optimum power for recording varies depending on an ambient temperature, a type of a medium, a linear velocity, etc. In consideration of this, record power is generally optimized by trial writing called OPC (optimum power control) prior to the actual recording of information in dye media (write-once type) and phase-transition media (rewritable type). In the OPC, predetermined information is written as a trial in a predetermined trial writing area called a PCA (power calibration area) of record media, and the written information is then reproduced.

The capacity of optical record media has been increasing. Optical record media used to have a single record layer structure, and are now beginning to have a multilayer structure comprised of two record layers, for example. In this manner, the structure of optical record medium is becoming more complex (see Patent Document 1).

As the record layer is configured as a multilayer structure such as that comprised of two layers, a further increase in record capacity can be expected. This is extremely useful for optical record media for which a capacity increase is of a paramount importance.

In optical record medium having multilayered record layers such as an optical record medium having two layers, various settings required for recording that used to be performed on a single layer optical record medium needs to be performed on multi-layers when write-once or rewriting is carried out for information recording. One of such settings is the OPC process that determines the optimum record level of laser power for recording information.

### [Patent Document 1]

Japanese Patent Application Publication No. 2000-311346.

The optical record medium having a multilayered structure, however, may have different specs than the optical record medium having a single-layer structure. There is thus a case in which a conventional OPC process for a single-layer structure cannot be simply applied as the OPC process for determining optimum record power for the multilayered structure.

The point in case will be described with reference to DVD+RW media having a single-side two-layer structure. Multilayered media widely known at present include DVD-ROM media having a single-side two-layer structure. The DVD-ROM media having a single-side two-layer structure is mainly classified into two types according to their track methods. One is a parallel track path method (PTP method), and the other is an opposite track path method (OTP method).

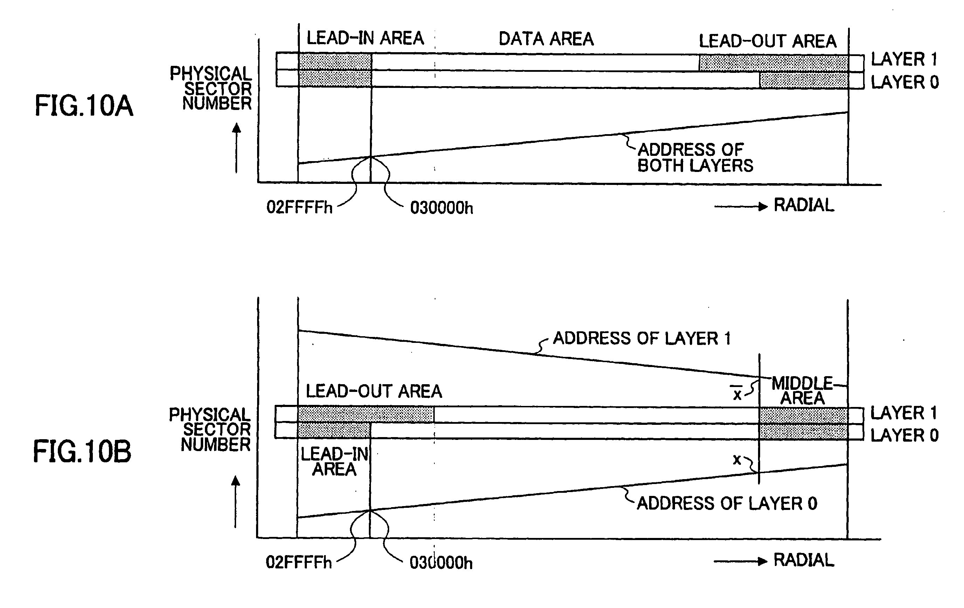

Fig. 10A shows the layout of physical address with respect to a single-side dual-layer disc of a PTP method (hereinafter referred to as a PTP disc). Fig. 10B shows the layout of physical address with respect to a single-side dual-layer disc of an OTP method (hereinafter referred to as an OTP disc).

As a basic configuration, the DVD disc has an Information Area that includes a Lead-in Area, a Data Area, and a Lead-out Area. The PTP disc has the Information Area separately for each record layer. The OTP disc has only one Information Area, and the Data Area of each record layer is followed by a Middle Area. In layers 0 and 1 of the PTP disc and the layer 0 of the OTP disc, data reproduction is carried out from the inner circumference to the outer circumference. In the layer 1 of the OTP disc, data reproduction is carried out from the outer circumference to the inner circumference. Each record layer of the PTP disc has consecutive physical addresses (Physical Sector Numbers) assigned from the Lead-in Area to the Lead-out Area. The OTP disc, on the other hand, has consecutive physical addresses assigned from the Lead-in Area to the Middle Area in the layer 0, with the physical addresses of the layer 0 being inverted on a bit-by-bit basis to be provided as the physical addresses of the layer 1, resulting in the physical addresses of the layer 1 increasing from the Middle Area to the Lead-out Area. Namely, the first address of the Data Area of the layer 1 is a bit-inverted address of the last address of the layer 0.

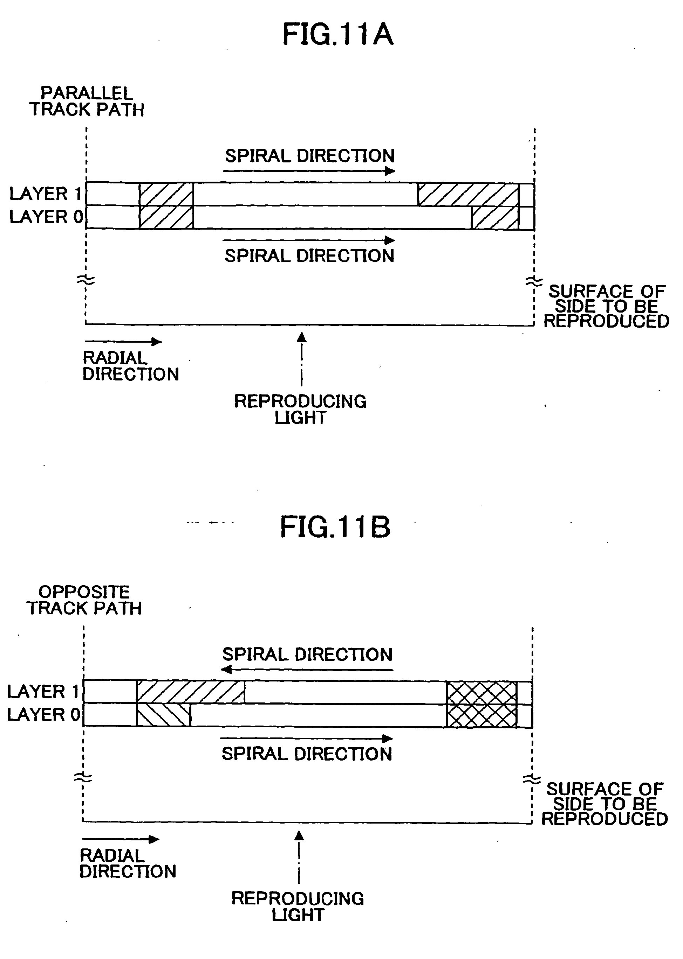

In the following, a description will be given with regard to a spiral direction of a track in the layers 0 and 1 of the PTP disc and the OTP disc. In the PTP disc, as shown in Fig. 11A, both the layer 0 and the layer 1 have a spiral direction extending from the inner circumference to the outer circumference of the disc (the optical pickup moves from the inner side to the outer side if tracking is left engaged). On the other hand, in the OTP disc as shown in Fig. 11B, the spiral direction of the layer 0 extends from the inner circumference to the outer circumference of the disc whereas the spiral direction of the layer 1 extends from the outer circumference to the inner circumference of the disc.

A record medium having a multilayered structure may be provided in a format corresponding to the PTP method or the OTP method in the same manner. In the following, a single-side dual-layer DVD+RW medium (OTP method) is taken as an example, and it is assumed that this DVD+RW medium has the same track and address structure as the currently-available single-side dual-layer DVD-ROM. The recording of layer 1 (the second record layer) will be examined below.

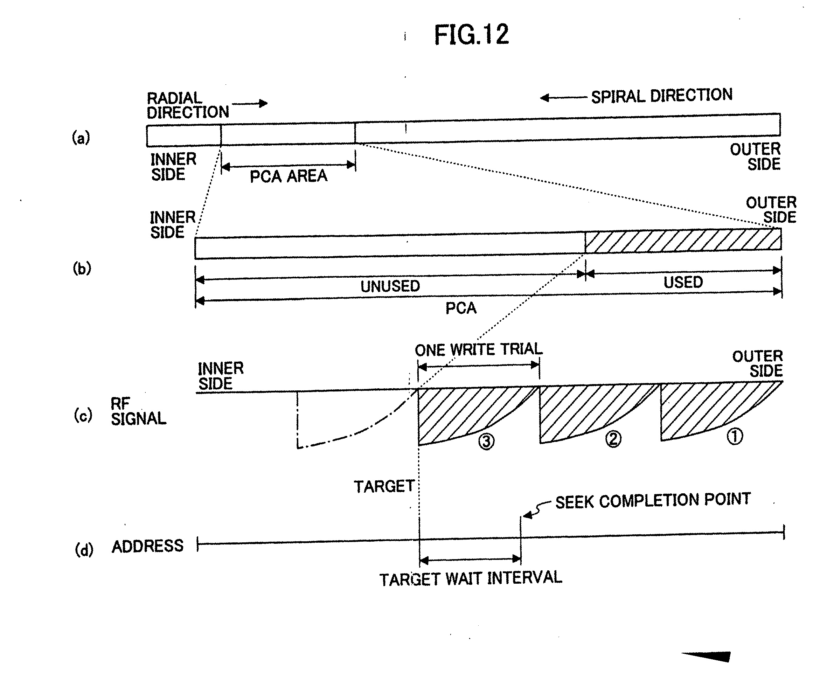

In this case, as shown in Fig. 12, the spiral direction of a track in the layer 1 (the second record layer) extends from the outer circumference to the inner circumference when an OPC process is performed on the write trial area (PCA area) provided in the layer 1 (the second record layer). The PCA area is generally comprised of a test area and a count area. The test area on which the write trial is performed is divided into 100 partitions (sub-areas), and each partition is comprised of 15 frames. A single OPC process uses a single partition (on a partition-by-partition basis). Emission power is changed multiple times in a stepwise manner with respect to the 15 frames included in the partition when performing a write trial (test recording). The partition on which the write trail has been performed is reproduced, and optimum recording power is determined based on the results of reproduced signals RF.

In such an OPC operation, the PCA area partition of the layer 1 (the second record layer) is successively used from the outer circumference to the inner circumference as shown in Fig. 12-(b). In this case, the write trial is performed such that the reproduced RF signal obtained from the write-trial portion has a waveform as schematically illustrated in Fig. 12-(c). Namely, recording is made by use of LD power ranging from the minimum level to the maximum level such that the range covers optimum recording power. The partition on which the write trial has been performed is reproduced thereby to determine optimum recording power based on the reproduced record quality. In this example, a description has been given with reference to a case in which write power for the write trial is changed from the minimum level to the maximum level. Alternatively, the write power may be changed from the maximum level to the minimum level.

When information is to be recorded on a target address or is to be reproduced from a target address, a seek operation is completed at an address (seek completion point) slightly ahead of the target address. Thereafter, tracking is engaged to wait for the target address until the target address is encountered. When the target address is encountered, recording or reproduction starts. This is a conventional mode of control (see Fig. 12-(d)). Since a write trial is performed on a partition by use of the OPC operation, and the result of the write trial is checked, at least one recording action and at least one reproducing action are carried out at target addresses during a series of OPC operations.

The portion where recording is made through the write trial of the OPC operation ("USED" portion of Fig. 12-(b) and portions ①②③ of Fig. 12-(c)) is subjected to the write trial that uses LD power ranging from the minimum level to the maximum level such as to cover optimum recording power. Some of the portion may thus have been recorded with excessively strong recording power. Such medium portion ends up having an overly-written recorded state, and its reflective index may be excessively low. In such portion, servo operations and/or address read operations may have an increased chance of instability, compared with portions where recording is made by use of normal, optimum recording power.

When a seek operation is performed to target such a write-trial area, thus, the seek operation itself may be likely to become unstable.

This results in the OPC operation becoming unstable.

In the case of a multilayered structure, failure may also occur due to the overlapping of PCA areas attributable to the overlapping of record layers.

JP-A-2002-358648 discloses a recording method for surely detecting the boundary between a nonrecording area and a recording area when optimal power is decided by trial recording before the recording of user data in a recordable disk. In the recording method, when the traveling direction of an optical spot is set from the inner peripheral direction to the outer peripheral direction in the trial recording area of an optical disk, and when the trial recording area is used from the outer peripheral side, an optical recording power is determined by trial recording in sectors outer than the target sector used to execute recording in that target sector. Thus, when next time trial recording is executed, the possibility of erroneously recognizing the recorded sector as a nonrecording sector can be reduced.

According to the present invention there is provided a method, apparatus and medium as defined in claims 1, 7 and 12. Embodiments of the invention are defined in the sub-claims.

Thus the invention provides for a write trial in a write-trial area for determining optimum recording power to be always performed in a stable manner. the information about the spiral direction, the identification of the spiral direction can be made by use of preexisting information.

### Brief Description of the Drawings

Fig. 1 is a block diagram showing an example of the basic entire construction of an optical information recording/reproducing apparatus according to one embodiment of the invention.
Fig. 2 is a block diagram showing an example of the internal construction of a system control device.
Fig. 3 is an illustrative drawing for explaining an example of an OPC operation process.
Fig. 4 is an illustrative drawing for explaining an example of an OPC operation process in the case of an opposite spiral direction.
Fig. 5 is an illustrative drawing showing the example of the process of Fig. 4 rewritten in a simplified manner.
Fig. 6 is an illustrative drawing showing the example of the process of Fig. 3 rewritten in a simplified manner.
Figs. 7A and 7B are schematic cross-sectional views showing examples in which write trial areas are staggered.
Fig. 8 is a schematic flowchart showing an example of recording operation control inclusive of OPC-process control.
Fig. 9 is a schematic flowchart showing another example of recording operation control inclusive of OPC-process control.
Figs. 10A and 10B are illustrative drawings showing the layout of physical addresses on a PTP disc and an OTP disc, respectively.
Figs. 11A and 11B are illustrative drawings showing spiral directions.
Fig. 12 is an illustrative drawing showing an example of a conventional OPC operation with respect to a record layer such as layer 1 of the OTP method.

### Best Mode for Carrying Out the Invention

In the following, an embodiment of the present invention will be described with reference to the accompanying drawings. This embodiment shows an example in which the code data of the DVD-ROM format is applied to an optical information recording/reproducing apparatus serving as an optical information recording apparatus that records information (performs write-once) on a dye-system medium having a single-side dual-layer structure. As a recording modulation method, the 8-16 modulation code (EFM modulation code) is used with mark-edge (PWM: pulse width modulation) recording. The present embodiment uses such a medium and record data, and causes a semiconductor laser to emit multi-pulses for recording, thereby forming record marks and spaces that represent recorded information.

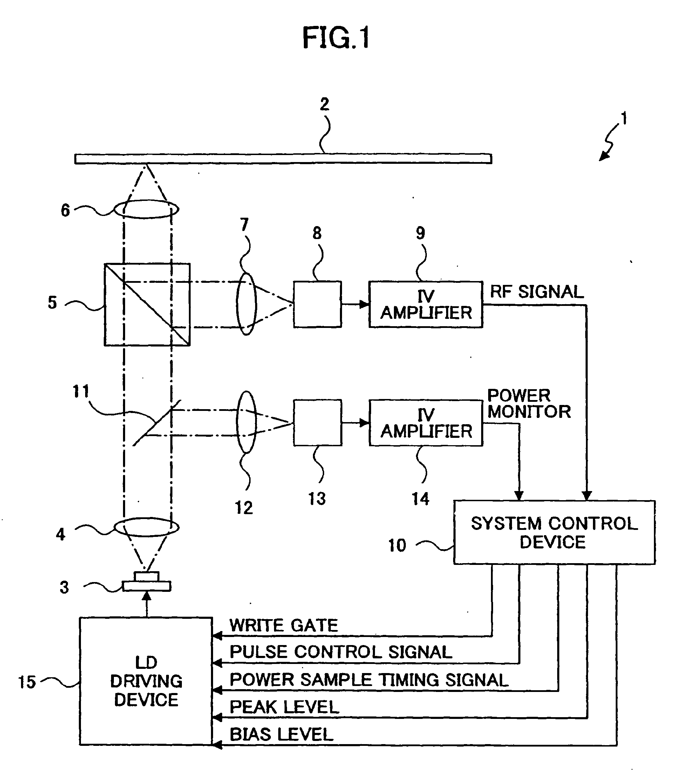

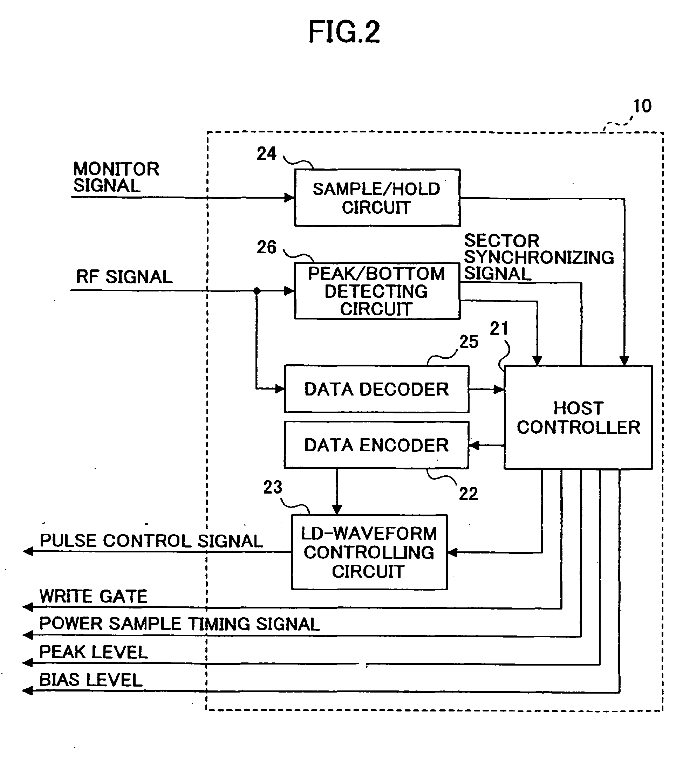

Fig. 1 is a block diagram showing the basic construction of an optical information recording/reproducing apparatus capable of recording/reproducing information. Fig. 2 is a block diagram showing the construction of a system control device.

In an optical information recording/reproducing apparatus 1 of the present embodiment, a semiconductor laser (LD) 3 is provided, serving as a light source for emitting a laser beam shone on an optical record medium 2 that is a single-side dual-layer DVD+R, for example, which is rotated by a spindle motor (not shown). The laser beam emitted from the semiconductor laser 3 is turned into parallel rays by a collimator lens 4, and is then condensed and shone on the record layer of the optical record medium 2 after passing through a polarization beam splitter 5 and an objective lens 6. Reflective light returning from the optical record medium 2 passes through the objective lens 6 to enter the polarization beam splitter 5. In the polarization beam splitter 5, the reflective light is reflected so as to be separated from the incident light, and passes through a detection lens 7 to enter a partitioned light receiving device (PD) 8, which has the light receiving area thereof partitioned into four areas. Received light signals corresponding to the respective partitioned areas of the partitioned light receiving device 8 provide bases for the a RF signal serving as an information signal, a servo signal Fo used for focusing purposes, and a servo signal Tr used for tracking purposes. The RF signal is subjected to current-to-voltage conversion and amplified by an IV amplifier 9 for provision to a system control device 10, in which the RF signal is processed for the purpose of outputting reproduced data serving as reproduced signals.

The servo signal Fo for the focusing purpose and the servo signal Tr for the tracking purpose are supplied to a Fo/Tr servo control device (not shown) for use in servo control, which controls actuators (not shown) for focusing/tracking of the objective lens 6. With this, control is performed such that the laser beam is properly focused and successfully follows a track on the optical record medium 2.

Further, a monitor device 13 is provided that receives a portion of the light emitted from the semiconductor laser 3 through a mirror 11 and a detection lens 12. A monitor electric current that is proportional to the emission power of the semiconductor laser 3 detected by the monitor device 13 is subjected to current-to-voltage conversion and amplification by an IV amplifier 14 to become a power monitor signal. The power monitor signal is supplied to the system control device 10 for use in APC control and the like.

With basic configuration, an LD driving device 15 serving as a light-source controlling unit drives and causes the semiconductor laser 3 to glow with reproduction power (read power) Pr at the time of information recording. The light having the reproduction power emitted from the semiconductor laser 3 is shone on the record layer of the optical record medium 2 via an optical pickup system. The light receiving device 8 receives the reflective light through the optical pickup system, and performs optoelectronic conversion. The IV amplifier 9 carries out current-to-voltage conversion and amplification to obtain a reproduced signal (RF signal).

Further, the monitor device 13 receives a portion of the light emitted from the semiconductor laser 3. The monitor power proportional to the emission power is turned into the power monitor signal through current-to-voltage conversion and amplification by the IV amplifier 14. With this provision, APC control is performed.

In the following, a recording operation will be described. In general, when information is recorded on a dye-system medium such as a DVD+R, the use of peak power Pw and bias power Pb corresponding to a peak level and a space level, respectively, is necessary.

At the time of recording information, a data encoder 22 and an LD-waveform controlling circuit 23 operating under the control of a host controller 21 generate a pulse controlling signal responsive to record data that is comprised of 8-16 modulation codes. The LD driving device 15 drives the semiconductor laser 3 with a drive current responsive to the pulse controlling signal, thereby letting the semiconductor laser 3 glow with a predetermined multi-pulse waveform. The emitted light is shone on the record layer of the optical record medium 2, thereby forming record marks on the optical record medium 2 for the recording of information.

The host controller 21 supplies a bias-level-current driving signal and a peak-level-current superimposing signal to the LD driving device 15 in order to control the emission level of space/peak power.

A sample/hold circuit 24 samples and holds the power monitor signal supplied from the IV amplifier 14 at timing when a power sample timing signal supplied from the host controller 21 changes from H to L at the time of long-space-data output (e.g., space data corresponding to more than 10T). Provision is thus made to control the space level power.

In respect of the peak level power, the peak-level-current superimposing signal is computed based on the differential efficiency n of the semiconductor laser 3, and is added to the space-level driving signal (bias-level-current driving signal), thereby supplying a drive current to the semiconductor laser 3.

The RF signal supplied from the IV amplifier 9 is provided to the host controller 21 via a data decoder 25. The RF signal is also supplied to a peak/bottom detecting circuit 26, whereby a detection signal indicative of the peak/bottom level can be obtained.

### [OPC Operation Controlling Method]

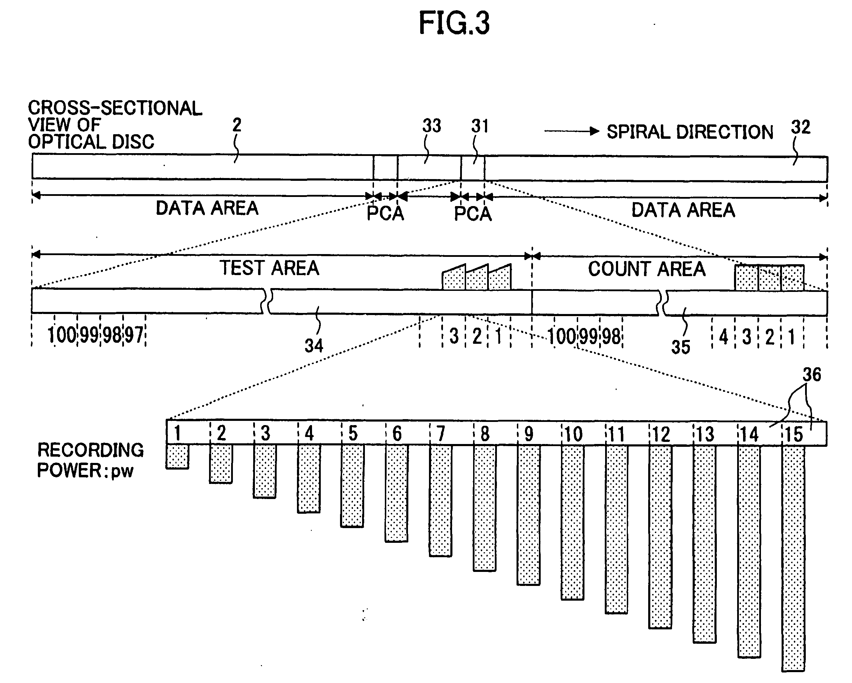

In the following, a description will be given of an OPC operation (write trial process) that is performed for the purpose of optimizing the level of recording power prior to an actual recording operation, with reference to Fig. 3. In this example, for the sake of simplicity of explanation, a single-layer structure is provided in which a write trial area 31 called a PCA (power calibration area) portion is situated on the innermost circumference side of the optical record medium 2. 32 designates a data area, and 33 designates a disc center hole. The write trial area 31 is comprised of a test area 34 and a count area 35. The test area 34 is divided and comprised of 100 partitions (sub-areas) 1 through 100, and each partition is comprised of 15 frames 36. In a typical OPC operation directed to the write trial area 31, a single partition is used for a single OPC operation, during which recording power is changed multiple times in a stepwise manner as a write trial as shown in the figure. Test signals written into respective frames 36 as a trial are reproduced, followed by determining optimum recording power based on the reproduced signals (RF signals).

In such an OPC operation, a portion of the count area 35 indicative of the number of OPC operations is updated each time an OPC operation is performed. The partition that needs to be reproduced immediately after a write trial and the partition that is to be used at the time of a next write trial are identified by referring to the number recorded in the count area 35.

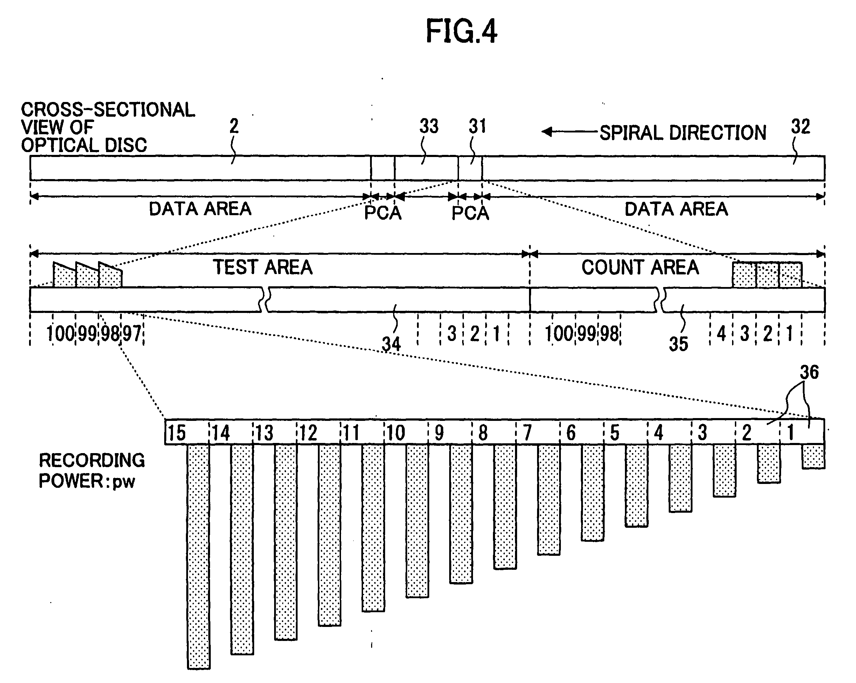

As basics of the OPC process controlling method according to the present embodiment, the partitions of the write trial area 31 are used successively from the outer circumference side to the inner circumference side as shown in Fig. 3 if the spiral direction of the track on the record layer extends from the inner circumference side to the outer circumference side, for example. (That is, the partitions are successively used in the order of No. 1, 2, and so on) If the spiral direction of the track on the record layer extends from the outer circumference side to the inner circumference side, however, the partitions of the write trial area 31 are used successively from the inner circumference side to the outer circumference side as shown in Fig. 4. (That is, the partitions are successively used in the order of No. 100, 99, and so on) In this manner, the usage of partitions is modified. It should be noted that although Fig. 4 illustrates a case in which the count area is used from the outer circumference to the inner circumference, the count area may alternatively be used from the inner circumference to the outer circumference.

In either direction, a write trial is performed in the spiral direction within each partition (which is thus opposite to the direction in which the partitions are successively used). Although the above example has been described with reference to a case in which the write trial area 31 is situated on the inner circumference side, the operation principle as described above is the same in cases in which the write trial area 31 is situated at a different location such as the outer circumference side.

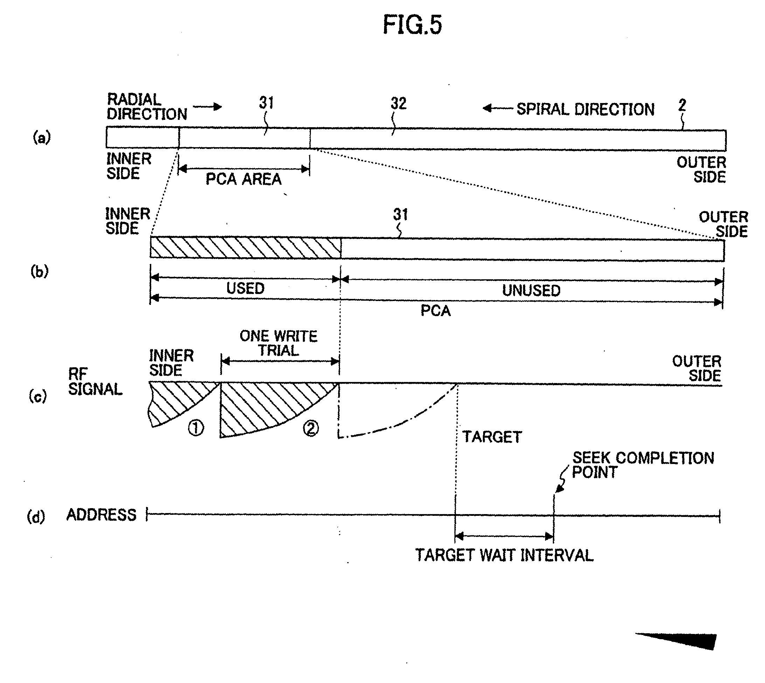

Fig. 5 is an illustrative drawing showing the processing method of Fig. 4 in a simplified manner. Fig. 5 shows a method wherein, if the spiral direction of the track on the record layer extends from the outer circumference to the inner circumference of the medium, the partitions of the write trial area 31 are used successively in the opposite direction from the inner circumference side to the outer circumference side of the medium. In this case, used areas (areas in which a write trial is finished) successively expand on the inner circumference side, with unused areas successively eroded on the outer circumference side.

According to the OPC-process controlling method as described above, the way the write trial area 31 is used and the way the RF signal appears are as shown in Fig. 5-(b) and (c) after the write trial is performed. At the time of a next write trial, a seek operation is first carried out to target a seek completion point as shown in Fig. 5-(d), followed by a wait for a target until the write position of the relevant partition (target) is encountered. In this case, unlike the case described in connection with Fig. 12, there is no need to access the portion where a write trial has been performed by the previous OPC operation, during the seek operation or during the wait for a target following the seek completion. Servo and address read operations can thus be performed in a stable manner. It follows that a stable seek operation is performed, which results in a stable OPC process.

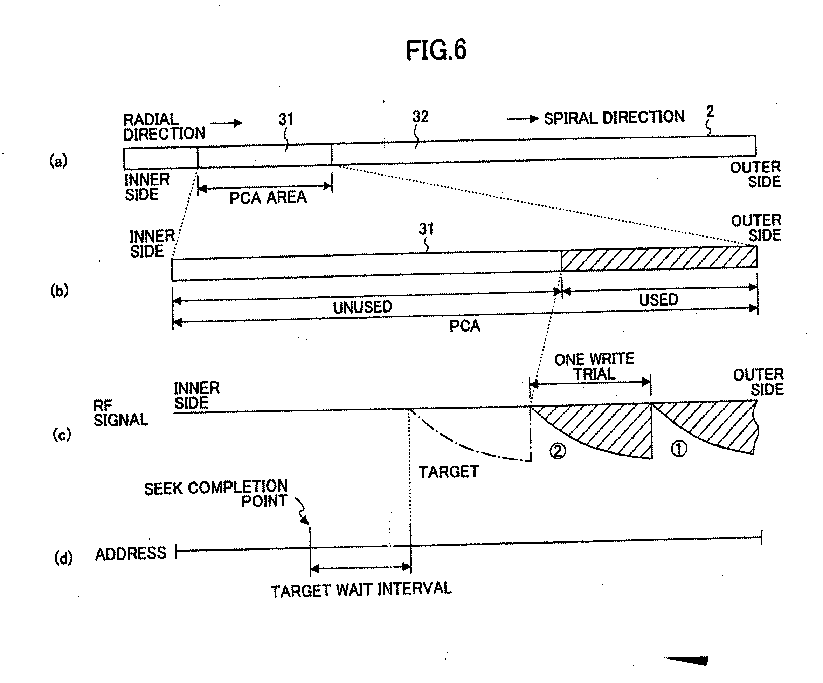

Fig. 6 is an illustrative drawing showing the processing method of Fig. 3 in a simplified manner. Fig. 6 shows a method wherein, if the spiral direction of the track on the record layer extends from the inner circumference to the outer circumference of the medium, the partitions of the write trial area 31 are used successively in the opposite direction from the outer circumference side to the inner circumference side of the medium. In this case, used areas (areas in which a write trial is finished) successively expand on the outer circumference side, with unused areas successively eroded on the inner circumference side.

According to the OPC-process controlling method as described above, the way the write trial area 31 is used and the way the RF signal appears are as shown in Fig. 6-(b) and (c) after the write trial is performed. At the time of a next write trial, a seek operation is first carried out to target a seek completion point as shown in Fig. 6-(d), followed by a wait for a target until the write position of the relevant partition (target) is encountered. In this case, there is no need to access the portion where a write trial has been performed by the previous OPC operation, during the seek operation or during the wait for a target following the seek completion. Servo and address read operations can thus be performed in a stable manner. It follows that a stable seek operation is performed, which results in a stable OPC process.

With the understanding of the operation principle as described above, a description will now be given of a dye-system medium (dual-layer DVD-R) (or a phase-transition-type medium (dual-layer DVD+RW)) having a single-side dual-layer structure. In the case of such optical record medium 2 having a multilayered structure, each record layer is provided with a write trial area. If the optical record medium 2 is of the PTP method that complies with the DVD-ROM format as shown in Fig. 10A and Fig. 11A, every record layer (layer 0 and layer 1) has the spiral direction of a track thereof extending from the inner circumference side of the medium to the outer circumference side of the medium. Accordingly, when an OPC operation is to be performed in the write trial area of these record layers (layer 0 and layer 1), the partitions of such an area are used successively from the outer circumference side to the inner circumference side in the same manner as described in the case of Fig. 3 and Fig. 6. With this provision, an OPC process can be performed without accessing a used portion used by a previous OPC operation.

If the optical record medium 2 is of the OTP method that complies with the DVD-ROM format as shown in Fig. 10B and Fig. 11B, the spiral direction of a track differs depending on the record layer (layer 0 or layer 1). Accordingly, when an OPC operation is to be performed in the write trial area of these record layers (layer 0 and layer 1), the order in which the partitions of such an area are successively used is changed depending on the spiral direction of the track on the record layer. Namely, when a write trial is performed on the write trial area of the first record layer (layer 0), the spiral direction of the track on the first layer (layer 0) extends from the inner circumference side of the medium to the outer circumference side of the medium. When an OPC operation is to be performed on the write trial area of the first record layer (layer 0), thus, the partitions of such an area are used successively from the outer circumference side to the inner circumference side in the same manner as described in the case of Fig. 3 and Fig. 6. When a write trial is performed on the write trial area of the second record layer (layer 1), the spiral direction of the track on the second layer (layer 1) extends from the outer circumference side of the medium to the inner circumference side of the medium. When an OPC operation is to be performed on the write trial area of the second record layer (layer 1), thus, the partitions of such an area are used successively from the inner circumference side to the outer circumference side in the same manner as described in the case of Fig. 4 and Fig. 5. With this provision, an OPC process can be performed without accessing a used portion used by a previous OPC operation no matter which one of the layers (layer 0 and layer 1) is used in the new OPC operation.

Such operation principle is not limited to application to the dual-layer media, but is equally applicable to optical recording media having a multilayered structure with three or more layers.

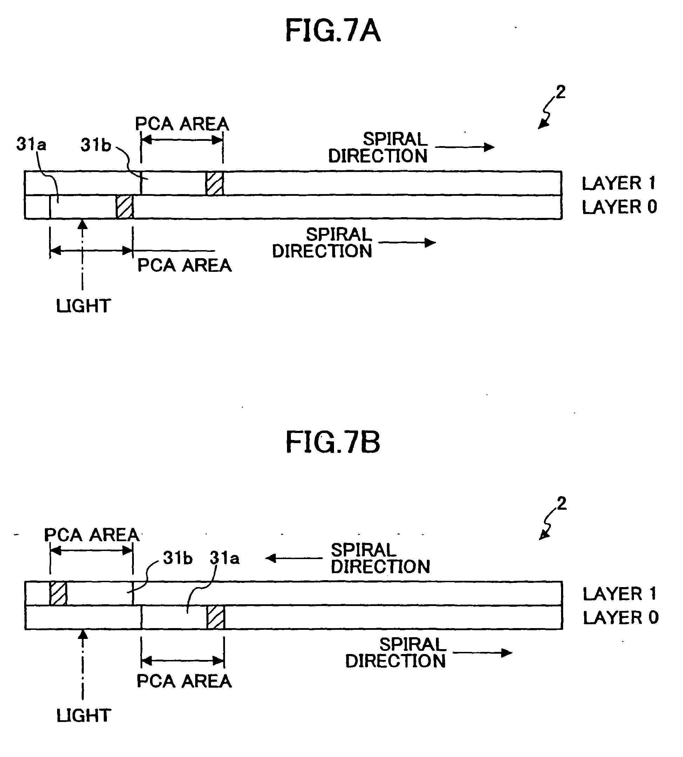

In the case of dual-layer-structure media of the PTP method, a write trial area is provided in each record layer. When the OPC process control as described above is taken into account, the write trial area 31 of each record layer is preferably positioned as shown in Fig. 7A. That is, it is preferable that write trial areas 31a and 31b are staggered such that the write trial area 31a on the record layer (layer 0) that is closer to the source of incident light is situated closer to the inner circumference side on the optical record medium 2 than is the write trial area 31b provided on the record layer (layer 1) that is farther away from the source of incident light. (In the figure, the hatched areas of these write trial areas indicate used portions, and the blank areas represent unused portions, which is the same as in Fig. 6).

Namely, in the case of the optical record medium 2 having such a multilayered structure, a plurality of record layers are superimposed one over another, so that the second layer (layer 1) is affected more or less by the recorded state of the first record layer (layer 0). In the case of the media of the PTP method, partitions in the write trial areas 31a and 31b of the respective record layers are used successively from the outer circumference side to the inner circumference side. If the write trial areas 31a and 31b are staggered such that the write trial area 31a of the first layer (layer 0) is situated closer to the inner circumference side of the medium than is the write trial area 31b of the second layer (layer 1), it is possible to reduce an effect of the first record layer (layer 0) on an access to the partitions of the write trial area 31b of the second record layer (layer 1).

Such reasoning is equally applicable to the case of the OTP method. In the dual-layer-structure media of the OTP method, each record layer is provided with a write trial area. When the OPC process control as described above is taken into account, the write trial area 31 of each record layer is preferably positioned as shown in Fig. 7B. That is, it is preferable that write trial areas 31a and 31b are staggered such that the write trial area 31a on the record layer (layer 0) that is closer to the source of incident light is situated closer to the outer circumference side on the optical record medium 2 than is the write trial area 31b provided on the record layer (layer 1) that is farther away from the source of incident light. (In the figure, the hatched areas of these write trial areas indicate used portions, and the blank areas represent unused portions, which is the same as in Fig. 5 and Fig. 6).

Namely, in the case of the optical record medium 2 having such a multilayered structure, a plurality of record layers are superimposed one over another, so that the second layer (layer 1) is affected more or less by the recorded state of the first record layer (layer 0). In the case of the media of the OTP method, partitions in the write trial areas 31a and 31b of the respective record layers are used in opposite sequences. If the write trial areas 31a and 31b are staggered such that the write trial area 31a of the first layer (layer 0) is situated closer to the outer circumference side of the medium than is the write trial area 31b of the second layer (layer 1), it is possible to reduce an effect of the first record layer (layer 0) on an access to the partitions of the write trial area 31b of the second record layer (layer 1).

### [Identification of Spiral Direction]

In order to implement the OPC process controlling method as described above, it is necessary to identify the spiral direction of a track in a record layer to which an OPC operation is to be performed. This is because the sequence in which the partitions of a write trial area are successively used is determined such that the sequence extends in the opposite direction to the spiral direction of the track of the relevant record layer.

To this end, information about the spiral direction is preformatted in the optical record medium 2. The preformatted information about the spiral direction is retrieved prior to a recording operation, and is used to identify the spiral direction of a track in the record layer.

In such a case, information that is a direct indication of the spiral direction of a track may be preformatted separately for each record layer of the optical record medium 2, thereby allowing reliable identification of the spiral direction. In the case of a DVD+RW medium or the like that complies with the DVD-ROM format as shown in Fig. 10 or the like, physical information about the optical record medium 2 is preformatted by use of ADIP (Address In Pre-groove), which is address information embedded by the wobble modulation of a track (guide groove) in the Lead-in Area. The information about the spiral direction of the track may be written as an expansion of such physical information.

The preformatted information about the spiral direction is not limited to such a direct indication. All that is necessary is to identify the record layer to which an OPC process is applied and to identify the type of media, so that such information can be an indirect indication. In the case of a medium that complies with the dual-layer DVD-ROM media, information about the number of layers and the track-path method (OTP method, PTP method) is recorded in the Lead-in Area. Such information may be retrieved, and is used to identify the type of a medium. Further, the Data Area also contains ID information that includes information about the record layer (indicative of whether the record layer is layer 0 or layer 1). In the case of the OTP method, the address indications of layer 1 are provided as complements of the address indications of layer 0. Based on such information, the spiral direction can be known. Namely, if layer 1 is of interest in the case of an OTP-method medium, it can be known that the spiral direction extends from the outer circumference side to the inner circumference side. In the case of layer 0, it can be known that the spiral direction extends from the inner circumference side to the outer circumference side. In the case of a PTP-method medium, the spiral direction extends from the inner circumference side to the outer circumference side regardless of the layer (layer 0 or 1) of interest. According to the complement representation of addresses in the OTP-method optical record medium, the address information lets you learn whether the record layer of interest is the first record layer (layer 0) or the second record layer (layer 1) Based on the determination of the record layer, the spiral direction can be identified. Namely, the complement representation of ADIP addresses also makes it possible to readily identify the spiral direction.

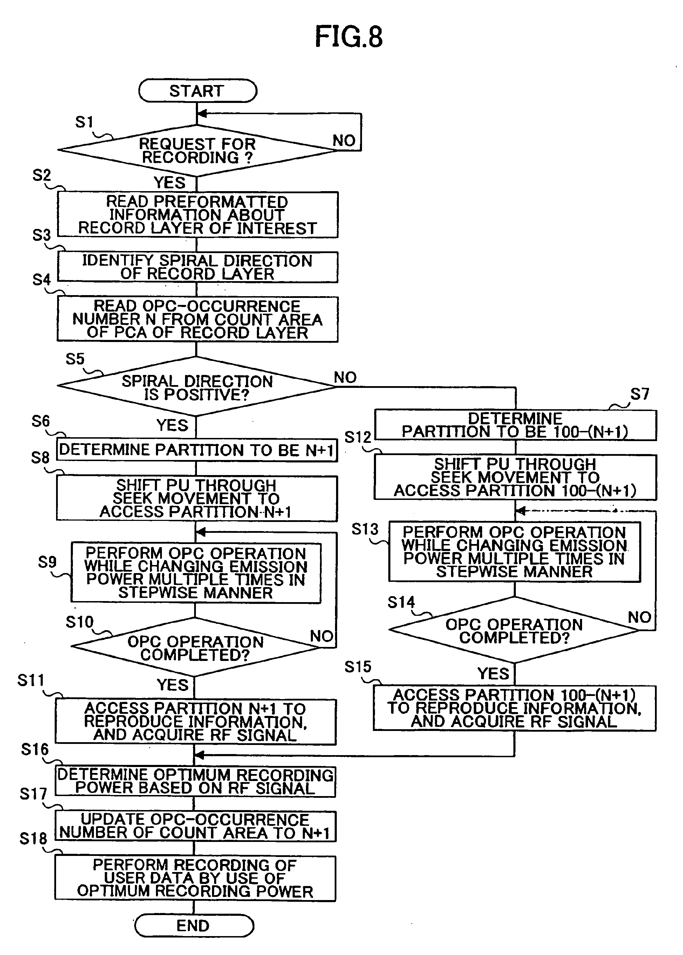

Among the OPC process controlling methods as described above, the OPC process control as illustrated in Fig. 3 or Fig. 4 may be performed for a recording operation, which is directed to the dual-layer optical record medium 2 (either the PTP method or the OTP method) in which information indicative of the spiral direction of the record layer is preformatted in the Lead-in Area of each record layer. An example of process control performed by the CPU 13 in such a case will be described with reference to a schematic flowchart shown in Fig. 8.

This process control is performed as one of the processes that are carried out in response to a request for the recording of user data issued from a user via the host (Y at step S1), for example. In response to such a request, preformatted information about the spiral direction of a record layer is retrieved from the Lead-in Area of the record layer to be recorded (S2). The process of step S2 is carried out as a spiral-information retrieving means or a spiral-information retrieving function. Based on the information retrieved by this process, the spiral direction of the record layer is identified (S3). Since the information is a direct indication, the spiral direction is identified directly from the information obtained at step S2. The process of step S3 is performed as a direction identifying means or a direction identifying function.

Following the initial processes as described above, an OPC mode is engaged, and an OPC-occurrence number N is retrieved by accessing the count area 35 of the write trial area 31 provided in the record layer (S4). If the determination made at step S3 indicates that the spiral direction of a track in the record layer is a positive direction (extending from the inner circumference side to the outer circumference side) (Y at S5), the partition (target) to be subjected to a write trial is set to N+1 (S6). Namely, provision is made to use partitions of the write trial area 31 successively in a direction (extending from the outer circumference side to the inner circumference side) opposite the positive direction. On the other hand, if the determination made at step S3 indicates that the spiral direction of a track in the record layer is the opposite direction (N at S5), the partition (target) to be subjected to a write trial is set to 100-(N+1) (S7). Namely, provision is made to use the partitions of the write trial area 31 successively in the positive direction as opposed to the negative direction. The processes of steps S6 and S7 are performed as a write-trial-mode determining means or as a write-trial-mode determining function.

Following step S6, the optical pickup is shifted through seek movement from the inner circumference side toward a seek-completion point along the track, followed by a wait for a target, and then accessing the partition N+1 (S8). This is done for the purpose of performing a write trial on the selected partition N+1 of the test area 34 provided in the write trial area 31. The LD driving device 15 changes the emission power of the semiconductor laser 3 successively in a stepwise manner with respect to 15 frames, thereby performing an OPC operation (write trial operation) on the partition N+1 (S9, S10). The processes of steps S9 and S10 are performed as a write-trial means or a write-trial process. After the completion of the OPC operation with respect to the partition N+1 (Y at S10), access is made to the partition N+1 again to reproduce the information written as a trial, thereby producing a RF signal (S11).

Following step S7, the optical pickup is shifted through seek movement from the outer circumference side toward a seek-completion point along the track, followed by a wait for a target, and then accessing the partition 100-(N+1) (S12). This is done for the purpose of performing a write trial on the selected partition 100-(N+1) of the test area 34 provided in the write trial area 31. The LD driving device 15 changes the emission power of the semiconductor laser 3 successively in a stepwise manner with respect to 15 frames, thereby performing an OPC operation (write trial operation) on the partition 100-(N+1) (S13, S14). The processes of steps S13 and S14 are performed as a write-trial means or a write-trial process. After the completion of the OPC operation with respect to the partition 100- (N+1) (Y at S14), access is made to the partition 100-(N+1) again to reproduce the information written as a trial, thereby producing a RF signal (S15).

Based on the RF signal reproduced at step S11 or S15 as described above, the optimum recording power of the semiconductor laser 3 is determined through well-known processes (S16). The processes of step S11 or S15 and step S16 are performed as an optimum power determining means or a optimum power determining function. The OPC-occurrence number is then updated to N+1 in the count area (S17).

In this manner, a series of steps of the OPC process are completed, and, then, the semiconductor laser 3 emits light with the optimum recording power with respect to a target address of the data area provided in the record layer, thereby performing the recording of user data (S18). The process of step S18 is performed as a recording-operation performing means or as a recording-operation performing function.

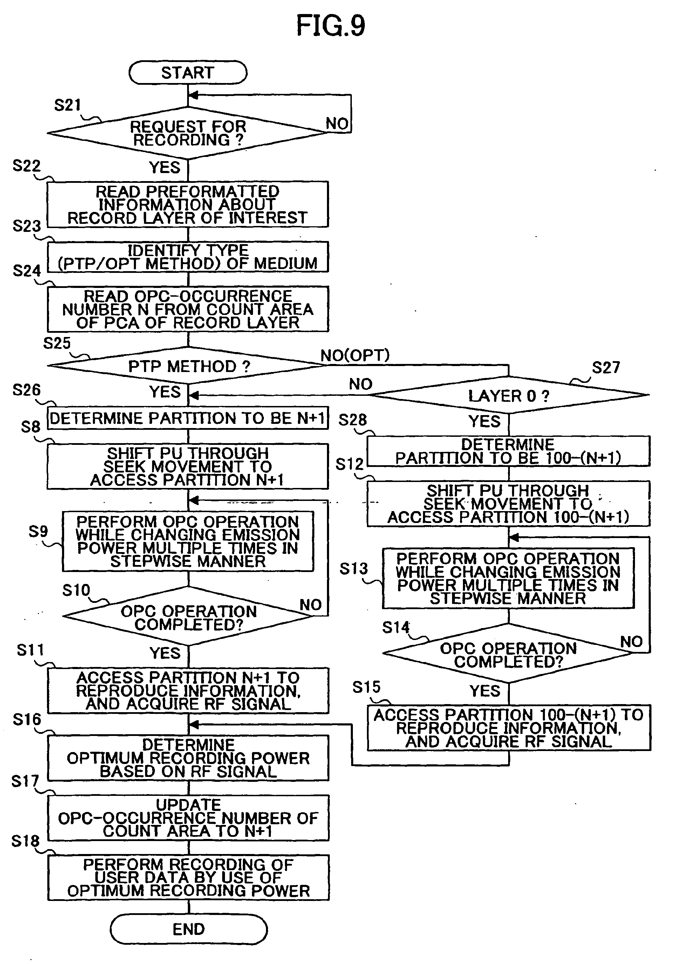

Among the OPC process controlling methods as described above, the OPC process control as illustrated in Fig. 3 or Fig. 4 may be performed for a recording operation, which is directed to the dual-layer optical record medium 2 (either the PTP method or the OTP method) in which information indicative of a media type (either the PTP method or the OTP method) and information indicative of a record layer (either layer 0 or layer 1) are preformatted in the Lead-in Area of each record layer. An example of process control performed by the CPU 13 in such a case will be described with reference to a schematic flowchart shown in Fig. 9.

This process control is performed as one of the processes that are carried out in response to a request for the recording of user data issued from a user via the host (Y at step S21), for example. In response to such a request, preformatted information is retrieved from the Lead-in Area of the record layer to be recorded (S22). The process of step S22 is carried out as a spiral-information retrieving means or a spiral-information retrieving function. Based on the information retrieved by step S22, a determination is made as to whether the type of the medium is the PTP method or the OTP method (S23).

Thereafter, an OPC mode is engaged, and an OPC-occurrence number N is retrieved by accessing the count area 35 of the write trial area 31 provided in the record layer (S24). If the determination made at step S23 indicates that the media is that of the PTP method (Y at S25), the partition (target) to be subjected to a write trial is set to N+1 (S26) regardless of whether the record layer is layer 0 or layer 1. Further, if the determination made at step S23 indicates that the medium is that of the OTP method (N at S25), and if the record layer is layer 0, (Y at S27), the partition (target) to be subjected to a write trial is also set to N+1 (S26). Namely, provision is made to use the partitions of the write trial area 31 successively in the opposite direction (from the outer circumference side to the inner circumference side).

On the other hand, if the determination made at step S23 indicates that the medium is that of the OTP method (N at S25), and if the record layer is layer 1, (N at S27), the partition (target) to be subjected to a write trial is set to 100-(N+1) (S28). Namely, provision is made to use the partitions of the write trial area 31 successively in the positive direction (from the inner circumference side to the outer circumference side).

The processes of steps S23 and S25 are performed as a direction identifying means or as a direction identifying function. The processes of steps S26 and S28 are performed as a write-trial-mode determining means or as a write-trial-mode determining function.

The following steps are performed in the same manner as described in connection with Fig. 8 for the respective modes.

Although the present invention has been described with reference to embodiments, the present invention is not limited to these embodiments, but various variations and modifications may be made without departing from the scope of the invention as set forth in the accompanying claims.

## Claims

1. A method of controlling a write trial process, which is performed, with respect to a record layer of an optical record medium having a plurality of record layers each having a write trial area on a track having a spiral form, by changing emission power in a stepwise manner in a sub-area where the write trial area is divided into a plurality of sub-areas, comprising:
a step of identifying a spiral direction of data reproduction of the track in the record layer to be recorded; and
a step of performing the write trial by using the sub-areas of the write trial area successively from an inner circumference side of the medium to an outer circumference side of the medium if the identifying of the spiral direction indicates that the record layer to be recorded has the spiral direction of the track extending from the outer circumference side of the medium to the inner circumference side of the medium, and performing the write trial by using the sub-areas of the write trial area successively from the outer circumference side of the medium to the inner circumference side of the medium if the identifying of the spiral direction indicates that the record layer to be recorded has the spiral direction of the track extending from the inner circumference side of the medium to the outer circumference side of the medium.

2. The method of controlling a write trial process as claimed in claim 1, wherein,in a case where the optical record medium having the plurality of record layers is an optical record medium on which recording is made by a parallel track path, PTP, method, the write trial is performed by using the sub-areas of the write trial area successively from the outer circumference side of the medium to the inner circumference side of the medium regardless of which one of the record layers is the record layer to be recorded.

3. The method of controlling a write trial process as claimed in claim 1, wherein, in a case where the optical record medium having the plurality of record layers is an optical record medium on which recording is made by an opposite track path, OTP, method, switching is made between the write trial performed by using the sub-areas of the write trial area successively from the inner circumference side of the medium to the outer circumference side of the medium and the write trial performed by using the sub-areas of the write trial area successively from the outer circumference side of the medium to the inner circumference side of the medium, depending on the record layer to be recorded.

4. The method of controlling a write trial process as claimed in claim 1, comprising a step of retrieving information about the spiral direction preformatted on the optical record medium is provided when the optical record medium has the information about the spiral direction preformatted thereon, wherein said step of identifying a spiral direction identifies the spiral direction of the track in the record layer to be recorded in response to the retrieved information about the spiral direction.

5. The method of controlling a write trial process as claimed in claim 4, wherein the optical record medium is provided with, as the information about the spiral direction, preformatted information descriptive of the spiral direction on a record-layer-by-record-layer basis.

6. The method of controlling a write trial process as claimed in claim 4, wherein the optical record medium is provided with, as the information about the spiral direction, preformatted information about a type of the optical record medium and preformatted information indicative of each record layer.

7. An optical information recording apparatus (1) comprising:
an optical pickup including a light source (3) for emitting laser light to be shone on an optical record medium (2) having a plurality of record layers each having a write trial area on a track having a spiral form;
light source controlling means (10,15) arranged to attend to drive control of the light source inclusive of a power change;
write trial means arranged to perform a write trial, with respect to the write trial area (31) of a record layer to be recorded prior to recording of information, by changing emission power in a stepwise manner in a sub-area where the write trial area is divided into a plurality of sub-areas;
direction identifying means arranged to identify a spiral direction of data reproduction of the track in the record layer to be recorded prior to the recording of information;
write-trial mode determining means arranged to determine,
according to the identified spiral direction, a sequence in which the sub-areas of the write trial area are used in the write trial performed by the write trial means;
optimum power determining means arranged to determine optimum recording power of the light source by using the optical pickup to reproduce the sub-areas having undergone the write trial performed by the write trial means; and
recording operation performing means arranged to perform recording of information with respect to the record layer to be recorded by causing the light source controlling means to control the emission power of the light source by use of the determined optimum recording power.

8. The optical information recording apparatus as claimed in claim 7, in which the write-trial-mode determining means is arranged to determine the sequence in which the sub-areas are used such that the write trial is performed by using the sub-areas of the write trial area successively from an inner circumference side of the medium to an outer circumference side of the medium if the identified spiral direction of the track extends from the outer circumference side of the medium to the inner circumference side of the medium in the record layer to be recorded, and such that the write trial is performed by using the sub-areas of the write trial area successively from the outer circumference side of the medium to the inner circumference side of the medium if the identified spiral direction of the track extends from the inner circumference side of the medium to the outer circumference side of the medium in the record layer to be recorded.

9. The optical information recording apparatus as claimed in claim 7, wherein a spiral information retrieving means is provided to retrieve information about the spiral direction preformatted on the optical record medium prior to the recording of information when the optical record medium has the information about the spiral direction preformatted thereon, wherein the direction identifying means is arranged to identify the spiral direction of the track in the record layer to be recorded in response to the information about the spiral direction retrieved by the spiral information retrieving means.

10. The optical information recording apparatus as claimed in claim 9, wherein the optical record medium is provided with, as the information about the spiral direction, preformatted information descriptive of the spiral direction on a record-layer-by-record-layer basis.

11. The optical information recording apparatus as claimed in claim 9, wherein the optical record medium is provided with, as the information about the spiral direction, preformatted information about a type of the optical record medium and preformatted information indicative of each record layer.

12. A computer-readable record medium having an optical-information-recording-purpose program recorded therein, the program being suitable for installation in a computer provided in an optical information recording apparatus comprising an optical pickup including a light source for emitting laser light to be shone on an optical record medium having a plurality of record layers each having a write trial area on a track having a spiral form, and a light source controlling means which attends to drive control of the light source inclusive of a power change, said program being such as to cause the computer to perform the method of any of claims 1 to 6.

## Patentansprüche

1. Verfahren zum Steuern eines Schreibversuchsprozesses, der mit Bezug auf eine Aufzeichnungsschicht eines optischen Aufzeichnungsmediums mit einer Vielzahl von Aufzeichnungsschichten ausgeführt wird, deren jede eine Schreibversuchsfläche auf einer Spur hat, die eine Spiralform hat, indem die Ernissionsleistlrng in einer Teilfläche schrittweise geändert wird, wo die Schrebversuchsfläche in eine Vielzahl von Teilflächen unterteilt ist, Folgendes umfassend:
einen Schritt des Identifizierens einer Spiralrichtung der Datenwiedergabe der Spur in der aufzuzeichnenden Aufzeichnungsschicht; und
einen Schritt des Ausführen des Schreibversuchs durch aufeinandexfolgendes Verwenden der Teilflächen der Schxeibvexsuchsfläche von einer Innenumfangsseite des Mediums zu einer Außenumfangsseite des Mediums, falls das Identifizieren der Spiralrichtung anzeigt, dass die aufzuzeichnende Aufzeichnungsschicht die Spiralrichtung der Spur hat, die von der Außenumfangsseite des Mediums zur Innenumfangsseite des Mediums verläuft, und des Ausfahrens des Schreibversuchs durch aufeinanderfolgendes Verwenden der Teilflächen der Schreibversuchsfläche von der Außenumfangsseite des Mediums zur Innenumfangsseite des Mediums, falls das Identifizieren der Spiralrichtung anzeigt, dass die aufzuzeichnende Aufzeichnungsschicht die Spiralrichtung der Spur hat, die von der Innenlrmfangsseite des Mediums zur Außenumfangsseite des Mediums verläuft.

2. Verfahren zum Steuern eines Schreibversuchsprozesses nach Anspruch 1, worin in einem Fall, wo das optische Aufzeichnungsmedium mit der Vielzahl von Aufzeichnungsschichten ein optisches Aufzeichnungsmedium ist, auf das die Aufzeichnung durch ein PTP(Parallelspurweg)-Verfahren gemacht wird, der Schreibversuch ausgeführt wird, indem die Teilflächen der Schreibversuchsfläche aufeinanderfolgend von der Außenumfangsseite des Mediums zur Irmenumfangsseite des Mediums ohne Rücksicht darauf verwendet werden, welche der Aufzeichnungsschichten die aufzuzeichnende Aufzeichnungsschicht ist.

3. Verfahren zum Steuern eines Schreibversuchsprozesses nach Anspruch 1, worin in einem Fall, wo das optische Aufzeichnungsmedium mit der Vielzahl von Aufzeichnungsschichten ein optisches Aufzeichnungsmedium ist, auf das die Aufzeichnung durch ein OTP(entgegengesetzter Spurweg)-Verfahren gemacht wird, ein Tausch gemacht wird zwischen dem Schreibversuch, der durch aufeinanderfolgendes Verwenden der Teilflächen der Schreibversuchsfläche von der Innenumfangsseite des Mediums zur Außenumfangsseite des Mediums ausgeführt wird, und dem Schreibversuch, der durch aufeinanderfolgendes Verwenden der Teilflächen der 5chreibversuchsfläche von der Außenumfangsseite des Mediums zur Innenuzxxfangsseite des Mediums in Abhängigkeit von der aufzuzeichnenden Aufzeichnungsschicht ausgeführt wird.

4. Verfahren zum Steuern eines Schreibversuchsprozesses nach Anspruch 1, einen Schritt des Abrufens von auf dem optischen Aufzeichnungsmedium vorformatierter Information über die Spiralrichtung umfassend, der bereitgestellt wird, wenn das optische Aufzeichnungsmedium die darauf vorformatierte Information über die Spiralrichtung hat, worin der Schritt des Identifizieren einer Spiralrichtung die Spiralrichtung der Spur in der Aufzeichnungsschicht identifiziert, die als Antwort auf die abgerufene Information über die Spiralrichtung aufzuzeichnen ist.

5. Verfahren zum Steuern eines Schreibversuchsprozesses nach Anspruch 4, worin dem optischen Aufzeichnungsmedium als die Information über die Spiralrichtung vorformatierte Information bereitgestellt wird, die die Spiralrichtung auf einer Aufzeichnungsschicht-um-Aufzeichnungsschicht-Basis beschreibt.

6. Verfahren zum Steuern eines Schreibversuchsprozesses nach Anspruch 4, worin dem optischen Aufzeichnungsmedium als die Information über die Spiralrichtung vorformatierte Information über einen Typ des optischen Aufzeichnungsmediums und vorformatierte Information bereitgestellt werden, die für jede Aufzeichnungsschicht bezeichnend ist.

7. Optische Informationsaufzeichnungsvorrichtung (1), Folgendes umfassend:
einen optischen Aufnehmer einschließlich einer Lichtquelle (3) zum Emittieren von Laserlicht, das auf ein optisches Aufzeichnungsmedium (2) mit einer Vielzahl von Aufzeichnungsschichten eingestrahlt wird, deren jede eine Schreibversuchsfläche auf einer Spur hat, die eine Spiralform hat;
Lichtquellen-Steuermittel (10, 15), dazu angeordnet, Antriebssteuerung der Lichtquelle einschließlich einer Leistungsänderung zu betreiben;
Schreibversuchmittel, dazu angeordnet, einen Schreibversuch mit Bezug auf die Schreibversuchsfläche (31) einer Aufzeichnungsschicht auszuführen, die vor dem Aufzeichnen von Information aufzuzeichnen ist, indem Emissionsleistung schrittweise in einer Teilfläche geändert wird, wo die Schreibversuchsfläche in eine Vielzahl von Teilflächen unterteilt ist;
Itichtungsidentifikationsmittel, dazu angeordnet, eine Spiralrichtung der Datenwiedergabe der Spur in der aufzuzeichnenden Aufzeichnungsschicht vor dem Aufzeichnen von Information zu identifizieren;
Schreibversuchsmodus-Bestimmungsmittel, dazu angeordnet, gemäß der identifizierten Spiralrichtung eine Sequenz zu bestimmen, in der die Teilflächen der Schreibversuchsfläche im Schreibversuch verwendet werden, der durch das Schreibversuchmittel ausgeführt wird;
Opticxxalleistungs-Bestimmungsmittel, dazu angeordnet, die optimale Aufzeichnungsleistung der Lichtquelle durch Verwenden des optischen Aufnehmers zu bestimmen, um die Teilflächen zu reproduzieren, die dem durch das Schreibversuchsmittel ausgeführten Schreibversuch ausgesetzt waren; und
Aufzeichnungsoperations-Ausführungsmittel, dazu angeordnet, das Aufzeichnen von Information mit Bezug auf die aufzuzeichnende Aufzeichnungsschicht auszuführen, indem das Lichtquellen-Steuermittel veranlasst wird, die Emissionsleistung der Lichtquelle durch Verwenden der bestimmten optimalen Aufzeichnungsleistung zu steuert.

8. Optische Informationsalrfzeichnungsvorrichtung nach Anspruch 7, worin das Schreibversuchsniodus-Bestimmungsmittel dazu angeordnet ist, die Sequenz zu bestimmen, in der die Teilflächen verwendet werden, sodass der Schreibversuch ausgeführt wird, indem die Teilflächen der Schreibversuchfläche aufeinanderfolgend von einer Innenumfangsseite des Mediums zu einer Außenumfangsseite des Mediums verwendet werden, falls die identifizierte Spiralrichtung der Spur von der Außenumfangsseite des Mediums zur Innenumfangsseite des Mediums in der aufzuzeichnenden Aufzeichnungsschicht verläuft, und sodass der Schreibversuch durch aufeinanderfolgendes Verwenden der Teilflächen der Schxeibversuchsfläche von der Außenumfangsseite des Mediums zur Innenumfangsseite des Mediums ausgeführt wird, falls die identifizierte Spiralrichtung der Spur von der Innenumfangsseite des Mediums zur Außenumfangsseite des Mediums in der aufzuzeichnenden Aufzeichnungsschicht verläuft.

9. Optische Informationsaufzeichnungsvorrichtung nach Anspruch 7, worin ein Spiralinfonnations-Abrufmittel bereitgestellt wird, um Information über die Spiralrichtung abzurufen, die auf dem optischen Aufzeichnungsmedium vor dem Aufzeichnen von Information vorformatiert wird, wenn das optische Aufzeichnungsmedium die Information über die darauf vorfvmaatiez-te Spiralrichtung hat, worin das Richtungsidentifikationsmittel dazu angeordnet ist, die Spiralrichtung der Spur in der aufzuzeichnenden Aufzeichnungsschicht als Antwort auf die Information über die 5piralrichtung zu identifizieren, die durch das Spiralinformations-Abrufmittel abgerufen wird.

10. Optische Informationsaufzeichnungsvorrichtuxtg nach Anspruch 9, worin das optische Aufzeichnungsmedium als die Information über die Spiralrichtung mit vorformatierter Information versorgt ist, die die Spiralrichtung auf einer Aufzeichnungsschicht-um-Aufzeichnungsschicht-Basis beschreibt.

11. Optische Informationsaufzeichnungsvorrichtung nach Anspruch 9, worin das optische Aufzeichnungsmittel als die Information über die Spiralrichtung mit vorformatierter Information über einen Typ des optischen Aufzeichnungsmediums und vorformatierter Information versorgt ist, die für jede Aufzeichnungsschicht bezeichnend ist.

12. Computerlesbares Aufzeichnungsmedium mit einem darin aufgezeichneten Programm für optischen InFormatiousaufzeichnungszweck, wobei das Programm zur Installation auf einem Computer geeignet ist, der in einer optischen InformationsaufzeichnungsvorTichtung bereitgestellt wird, die einen optischen Aufnehmer einschließlich einer Lichtquelle zum Emittieren von Laserlicht umfasst, das auf ein optisches Aufzeichnungsmedium mit einer Vielzahl von Aufzeichnungsschichten einzustrahlen ist, deren jede eine Schreibversuchsfläche auf einer Spur hat, die eine Spiralform hat, und ein Lichtquellen-Steuermittel, das die Antriebssteuerung der Lichtquelle einschließlich einer Leistungsänderung betreibt, wobei das Programm den Computer veranlassen kann, das Verfahren nach einem der Ansprüche 1 bis 6 auszuführen.

## Revendications

1. Procédé destiné à commander un processus d'essai d'écriture, lequel est mis en oeuvre, relativement à une couche d'enregistrement d'un support d'enregistrement optique présentant une pluralité de couches d'enregistrement présentant chacune une zone d'essai d'écriture sur une piste ayant une forme de spirale, en changeant la puissance d'émission de manière progressive dans une sous-zone où la zone d'essai d'écriture est divisée en une pluralité de sous-zones, le procédé comprenant :
une étape consistant à identifier une direction en spirale de production de données de la piste dans la couche d'enregistrement à enregistrer ; et
une étape consistant à mettre en oeuvre l'essai d'écriture en utilisant les sous-zones de la zone d'essai d'écriture successivement, d'un côté de circonférence intérieure du support à un côté de circonférence extérieure du support, si l'identification de la direction en spirale indique que la couche d'enregistrement à enregistrer présente la direction en spirale de la piste s'étendant du côté de circonférence extérieure du support au côté de circonférence intérieure du support, et à mettre en oeuvre l'essai d'écriture en utilisant les sous-zones de la zone d'essai d'écriture successivement, du côté de circonférence extérieure du support au côté de circonférence intérieure du support, si l'identification de la direction en spirale indique que la couche d'enregistrement à enregistrer présente la direction en spirale de la piste s'étendant du côté de circonférence intérieure du support au côté de circonférence extérieure du support.

2. Procédé destiné à commander un processus d'essai d'écriture selon la revendication 1, dans lequel, dans un cas où le support d'enregistrement optique présentant la pluralité de couches d'enregistrement est un support d'enregistrement optique sur lequel l'enregistrement est réalisé au moyen d'un procédé de chemin de piste parallèle, PTP, l'essai d'écriture est mis en couve en utilisant les sous-zones de la zone d'essai d'écriture successivement, du côté de circonférence extérieure du support au côté de circonférence intérieure du support, quel que soit la couche d'enregistrement à enregistrer parmi les couches d'enregistrement,

3. Procédé destiné à commander un processus d'essai d'écriture selon la revendication 1, dans lequel, dans un cas où le support d'enregistrement optique présentant la pluralité de couches d'enregistrement est un support d'enregistrement optique sur lequel l'enregistrement est réalisé au moyen d'un procédé de chemin de piste inverse, OTP, une permutation est réalisée entre l'essai d'écriture mis en oeuvre en utilisant les sous-zones de la zone d'essai d'écriture successivement, du côté de circonférence intérieure du support au côté de circonférence extérieure du support, et l'essai d'écriture mis en oeuvre en utilisant les sous-zones de la zone d'essai d'écriture successivement, du côté de circonférence extérieure du support au côté de circonférence intérieure du support, selon la couche d'enregistrement à enregistrer.

4. Procédé destiné à commander un processus d'essai d'écriture selon la revendication 1, comprenant une étape consistant à récupérer des informations connexes à la direction en spirale préformatées sur le support d'enregistrement optique, laquelle est mise en oeuvre lorsque le support d'enregistrement optique présente les informations connexes à la direction en spirale préformatées, dans lequel ladite étape d'identification d'une direction en spirale identifie la direction en spirale de la piste dans la couche d'enregistrement à enregistrer, en réponse aux informations récupérées connexes à la direction en spirale.

5. Procédé destiné à commander un processus d'essai d'écriture selon la revendication 4, dans lequel le support d'enregistrement optique est doté, en qualité d'informations connexes à la direction en spirale, d'informations préformatées descriptives de la direction en spirale sur une base « couche d'enregistrement par couche d'enregistrement ».

6. Procédé destiné à commander un processus d'essai d'écriture selon la revendication 4, dans lequel le support d'enregistrement optique est doté, en qualité d'informations connexes à la direction en spirale, d'informations préformatées connexes à un type de support d'enregistrement optique et d'informations préformatées indicatives de chaque couche d'enregistrement.

7. Dispositif d'enregistrement d'informations optiques (1) comprenant :
un capteur optique incluant une source de lumière (3) pour émettre une lumière laser sur un support d'enregistrement optique (2) présentant une pluralité de couches d'enregistrement présentant chacune une zone d'essai d'écriture sur une piste ayant une forme de spirale ;
un moyen de commande de source de lumière (10, 15) agencé de manière à essayer de commander une source de lumière en incluant une modification de puissance;
un moyen d'essai d'écriture agencé de manière à mettre en couve un essai d'écriture, relativement à la zone d'essai d'écriture (31) d'une couche d'enregistrement à enregistrer avant l'enregistrement d'informations, en modifient une puissance d'émission de manière progressive dans une sous-zozxe où la zone d'essai d'écriture est divisée en une pluralité de sous-zones;
un moyen d'identification de direction agencé de manière à identifier une direction en spirale de production de données de la piste dans la couche d'enregistrement à enregistrer avant l'enregistrement d'informations ;
un moyen de détermination de mode d'essai d'écriture agencé de manière à déterminer, selon la direction en spirale identifiée, une séquence dans laquelle les sous-zones de la zone d'essai d'écriture sont utilisées dans l'essai d'écriture mis en oeuvre par le moyen d'essai d'écriture;
un moyen de détermination de puissance optimale agencé de manière à déterminer une puissance d'enregistrement optimale de la source de lumière en utilisant le capteur optique pour reproduire les sous-zones ayant subi l'essai d'écriture mis en couve par le moyen d'essai d'écriture ; et
un moyen de mise en oeuvre d'opération d'enregistrement agencé de manière à mettre en oeuvre un enregistrement d'informations relativement à la couche d'enregistrement à enregistrer, en amenant le moyen de commande de source de lumière à commander la puissance d'émission de la source de lumière en faisant appel à la puissance d'enregistrement optimale déterminée.

8. Dispositif d'enregistrement d'informations optiques selon la revendication 7, dans lequel le moyen de détermination de mode d'essai d'écriture est agencé de manière à déterminer la séquence dans laquelle les sous-zones sont utilisées, de sorte que l'essai d'écriture est mis en oeuvre en utilisant les sous-zones de la zone d'essai d'écriture successivement, d'un côté de circonférence intérieure du support à un côté de circonférence extérieure du support si la direction en spirale identifiée de la piste s'étend du côté de circonférence extérieure du support au côté de circonférence intérieure du support dans la couche d'enregistrement à enregistrer, et de sorte que l'essai d'écriture est mis en oeuvre en utilisant les sous-zones de la zone d'essai d'écriture successivement, du côté de circonférence extérieure du support au côté de circonférence intérieure du support si la direction en spirale identifiée de la piste s'étend du côté de circonférence intérieure du support au côté de circonférence extérieure du support dans la couche d'enregistrement à enregistrer.

9. Dispositif d'enregistrement d'informations optiques selon la revendication 7, dans lequel un moyen de récupération d'informations de direction en spirale est délivré pour récupérer des informatisons connexes à la direction en spirale préformatées sur le support d'enregistrement optique avant l'enregistrement d'informations, lorsque le support d'enregistrement optique présente les informations connexes à la direction en spirale préformatées, dans lequel le moyen d'identification de direction est agencé de manière à identifier la direction en spirale de la piste dans la couche d'enregistrement à enregistrer, en réponse aux informations connexes à la direction en spirale récupérées par le moyen de récupération d'informations de direction en spirale.

10. Dispositif d'enregistrement d'informations optiques selon la revendication 9, dans lequel le support d'enregistrement optique est doté, en qualité d'informations connexes à la direction en spirale, d'informations préformatées descriptives de la direction en spirale sur une base « couche d'enregistrement par couche d'enregistrement ».

11. Dispositif d'enregistrement d'informations optiques selon la revendication 9, dans lequel le support d'enregistrement optique est doté, en qualité d'informations connexes à la direction en spirale, d'informations préformatées connexes à un type de support d'enregistrement optique et d'informations préformatées indicatives de chaque couche d'enregistrement.

12. Support d'enregistrement lisible par un ordinateur présentant un programme spécifique d'enregistrement d'informations optiques, le programme étant apte à être installé dans un ordinateur doté d'un dispositif d'enregistrement d'informations optiques comprenant un capteur optique incluant une source de lumière destinée à émettre une lumière laser sur un support d'enregistrement optique présentant une pluralité de couches d'enregistrement présentant chacune une zone d'essai d'écriture sur une piste ayant une forme de spirale, et comportant un moyen de commande de source de lumière lequel essaie de commander la source de lumière en incluant une modification de puissance, ledit programme étant de nature à amener l'ordinateur à mettre en oeuvre le procédé selon l'une quelconque des revendications 1 à 6.
